Europäisches Patentamt

**European Patent Office**

**Office européen des brevets**

(19)

(11) Numéro de publication: **0 245 134**
**B1**

(12)

# FASCICULE DE BREVET EUROPEEN

(45) Date de publication du fascicule du brevet:
**10.10.90**

(51) Int. Cl.⁵: **F22B 37/00,** F28F 11/00,
B21D 39/06, B23P 19/02

(21) Numéro de dépôt: **87400782.6**

(22) Date de dépôt: **07.04.87**

(54) **Procédé et dispositif de chemisage d'un tube périphérique d'un générateur de vapeur.**

(30) Priorité: **30.04.86 FR 8606344**

(43) Date de publication de la demande:
**11.11.87 Bulletin 87/46**

(45) Mention de la délivrance du brevet:
**10.10.90 Bulletin 90/41**

(84) Etats contractants désignés:
**BE CH DE ES GB IT LI SE**

(56) Documents cités:
**EP-A- 0 066 791**
**EP-A- 0 137 140**
**EP-A- 0 137 984**
**EP-A- 0 139 494**
**EP-A- 0 153 670**
**FR-A- 2 282 097**

(73) Titulaire: **FRAMATOME, Tour Fiat 1, Place de la Coupole,**
**F-92400 Courbevoie(FR)**

(72) Inventeur: **Cartry, Jean-Pierre, 117 Cours Gambetta,**
**F-69003 Lyon(FR)**
Inventeur: **Fraissenet, Bruno, 37 rue Imbert Colomes,**
**F-69001 Lyon(FR)**

(74) Mandataire: **Moncheny, Michel et al, c/o Cabinet**
**Lavoix 2 Place d'Estienne d'Orves, F-75441 Paris**
**Cedex 09(FR)**

ACTORUM AG

## Description

L'invention concerne un procédé et un dispositif de chemisage d'un tube périphérique d'un générateur de vapeur et en particulier d'un générateur de vapeur d'un réacteur nucléaire à eau sous pression.

Les générateurs de vapeur des réacteurs nucléaires à eau sous pression comportent un faisceau de tubes parallèles dont la section transversale est sensiblement circulaire. Ces tubes sont disposés suivant un réseau régulier dans les sections transversales du faisceau et sont fixés à leurs extrémités dans une plaque tubulaire de forte épaisseur, de forme circulaire.

Les tubes du faisceau dans lesquels circule l'eau sous pression constituant le fluide de refroidissement du réacteur sont pliés en U à leur partie supérieure, de façon à constituer deux branches parallèles dont les extrémités sont serties par dudgeonnage dans la plaque tubulaire. La plaque tubulaire est traversée sur toute son épaisseur par les tubes qui affleurent l'une des faces de cette plaque constituant la face d'entrée et qui sont saillants par rapport à l'autre face ou face de sortie, pour pénétrer dans la zone du générateur de vapeur recevant l'eau d'alimentation. La partie du générateur de vapeur située endessous de la face d'entrée recevant l'eau sous pression qui est le fluide primaire du réacteur, constitue une boîte à eau de forme hémisphérique se raccordant à la plaque tubulaire et séparée par une cloison transversale délimitant un compartiment d'arrivée de l'eau sous pression venant de la cuve du réacteur et un compartiment de récupération de l'eau sous pression ayant circulé dans les tubes.

Les tubes du faisceau du générateur de vapeur sont soumis en servie à de fortes contraintes mécaniques et thermiques et au pouvoir corrosif du fluide primaire sur leur surface intérieure et de l'eau d'alimentation sur leur surface externe. La corrosion est particulièrement forte dans la zone des tubes située un peu au-dessus de la face de sortie de la plaque tubulaire qui correspond à la zone de transition entre la partie déformée lors du dudgeonnage et la partie non déformée des tubes. Il apparaît donc assez fréquemment des fissures dans cette zone de transition. L'apparition de telles fissures provoque l'introduction de fluide primaire chargé de produits radio-actifs dans l'eau d'alimentation du générateur de vapeur. La vapeur formée à partir de cette eau d'alimentation est envoyée dans la turbine du réacteur nucléaire et circule dans de nombreux composants situés à l'extérieur de l'enceinte de sécurité du réacteur. La vapeur formée peut également être rejetée à l'atmosphère dans certaines phases d'exploitation du réacteur.

Il importe donc que l'eau d'alimentation ne renferme aucun produit radio-actif, pour toutes ces raisons. Il est donc nécessaire de détecter toute fuite à travers la paroi d'un tube de générateur de vapeur et d'y remédier très rapidement.

Pendant les phases d'arrêt normal pour entretien du réacteur, ou lors des arrêts pour incidents, il est connu d'assurer la mise hors service des tubes défectueux des générateurs de vapeur du réacteur nucléaire. Il est connu en particulier d'introduire un bouchon dans l'une au moins des extrémités du tube défectueux et de réaliser l'expansion de ce bouchon pour interdire toute circulation d'eau sous pression dans le tube. L'inconvénient principal d'un tel procédé de bouchage des tubes d'un générateur de vapeur est qu'il diminue la surface d'échange thermique du générateur de vapeur proportionnellement au nombre de tubes mis hors service. Dans le cas d'un générateur de vapeur comportant un grand nombre de tubes défectueux, la surface d'échange résiduelle peut devenir insuffisante.

On a donc proposé, pour augmenter la durée de vie des générateurs de vapeur, de réaliser un chemisage de la partie des tubes présentant des fissures, en introduisant, par l'extrémité du tube affleurant la plaque tubulaire, un manchon dont on réalise ensuite l'expansion à l'intérieur du tube, au voisinage de ses extrémités. Pour assurer une jonction étanche entre le manchon et le tube à réparer, l'expansion diamètrale de ce manchon est suivie d'une opération de sertissage par dudgeonnage du manchon dans ses zones expansées. Cette opération de dudgeonnage peut être complétée ou remplacée par un soudage ou un brasage.

Le chemisage d'un tube de générateur de vapeur est réalisé depuis la boîte à eau qui est accessible par une ouverture de visite, soit de façon manuelle, soit en utilisant un outillage à commande automatique complexe.

Dans tous les cas, les réparations des tubes par chemisage sont limitées à la zone centrale de la plaque tubulaire par le fait qu'il est nécessaire d'utiliser des manchons de grande longueur qui ne peuvent être introduits dans les tubes périphériques, à cause de la forme hémisphérique de la boîte à eau ne laissant qu'un dégagement insuffisant pour l'introduction des tubes au voisinage des bords de la plaque tubulaire. Il est en effet nécessaire d'utiliser des manchons d'une longueur sensiblement supérieure à l'épaisseur de la plaque tubulaire, puisque l'extrémité inférieure du manchon doit être placée dans le tube, dans sa zone affleurant la face d'entrée et que son extrémité supérieure doit se trouver au-dessus de la zone de transition dans laquelle apparaissent généralement les fissures.

Dans le cas des générateurs de vapeur des réacteurs nucléaires actuellement en service, la plaque tubulaire a une épaisseur supérieure à 0,50 mètre et les manchons de chemisage utilisés ont une longueur voisine de 0,70 m. Cette longueur importante du manchon interdit l'utilisation de la technique du chemisage pour les tubes situés sur les rangées périphériques représentant à peu près 25% des tubes du faisceau. Le bouchage des tubes reste donc la seule technique utilisable pour les tubes périphériques alors qu'il serait souhaitable de pouvoir réparer ces tubes par chemisage pour éviter de diminuer la surface d'échange du générateur de vapeur, après une utilisation de longue durée au cours de laquelle de nombreux tubes périphériques sont devenus défectueux.

Le but de l'invention est donc de proposer un procédé de chemisage d'un tube périphérique d'un générateur de vapeur comportant un faisceau de tubes parallèles ayant une section transversale de forme sensiblement circulaire dans laquelle les tubes sont régulièrement répartis, ces tubes étant sertis à leurs extrémités dans une plaque tubulaire circulaire, sur toute l'épaisseur de cette plaque, de façon à être saillants par rapport à l'une des faces de la plaque appelée face de sortie et à affleurer l'autre face ou face d'entrée, en-dessous de laquelle le générateur de vapeur constitue une boîte à eau de forme hémisphérique, les extrémités des tubes périphériques affleurant la face d'entrée de la plaque tubulaire étant situées à proximité de la paroi de la boite à eau et le procédé de chemisage comportant, de manière connue, l'introduction d'un manchon dans le tube par l'une de ses extrémités depuis la face d'entrée de la plaque tubulaire, la fixation par expansion diamètrale du manchon à l'intérieur du tube dans au moins deux zones situées au voisinage de ses extrémités et le sertissage par dudgeonnage du manchon dans chacune des zones d'expansion (connu du document EP-A 0 137 984).

Dans ce but le dudgeonnage du manchon est effectué dans une zone du tube située à l'intérieur de la plaque tubulaire dans une position sensiblement équidistante des faces de la plaque tubulaire, à proximité de la fibre neutre de la plaque tubulaire et dans une zone située au-delà de la face de sortie de la plaque tubulaire, le manchon présentant une longueur comprise entre 40 et 80 % de l'épaisseur de la plaque tubulaire.

L'invention est également relative à un dispositif permettant le chemisage des tubes périphériques d'un générateur de vapeur et comportant en particulier un outillage pour le dudgeonnage d'un manchon à l'intérieur d'un tube périphérique.

Afin de bien faire comprendre l'invention, on va maintenant décrire, à titre d'exemple non limitatif, en se référant aux figures jointes en annexe, un exemple de mise en oeuvre d'un procédé de chemisage de tubes périphériques suivant l'invention et les outillages utilisés pour cette mise en œuvre.

La figure 1 est une vue en perspective éclatée de la partie inférieure d'un générateur de vapeur d'un réacteur nucléaire à eau sous pression.
La figure 2 est une vue en coupe à plus grande échelle d'une partie du générateur de vapeur, montrant la plaque tubulaire et deux tubes traversant cette plaque munis de manchons de chemisage.
La figure 3a est une vue en coupe agrandie d'un tube de générateur de vapeur, dans une phase intermédiaire d'une opération de chemisage.
La figure 3b est une vue en coupe agrandie d'un tube du générateur de vapeur, à l'issue d'une opération de chemisage.
La figure 4 est une vue en perspective d'un outillage selon un premier mode de réalisation permettant d'effectuer le dudgeonnage de la partie inférieure d'un manchon à l'intérieur d'un tube périphérique d'un générateur de vapeur.
La figure 5 est une vue en coupe suivant V-V de l'outillage représenté sur la figure 4.

La figure 6 est une vue en élévation latérale du chariot de l'outillage représenté sur les figures 4 et 5.
La figure 7 est une vue en coupe transversale du chariot de l'outillage et de ses moyens de guidage.
La figure 8 est une vue en coupe transversale des moyens de fixation de l'outillage sur un bras de manutention disposé dans la boîte à eau du générateur.
La figure 9 est une vue en coupe par un plan vertical d'un outillage selon un second mode de réalisation permettant d'effectuer le dudgeonnage de la partie inférieure d'un manchon à l'intérieur d'un tube de générateur de vapeur.
La figure 9a est une vue en coupe suivant A-A de la figure 9.
Les figures 10 et 10a sont des vues en coupe partielle par un plan vertical d'un outillage selon un troisième mode de réalisation et dans deux positions de travail, permettant d'effectuer le dudgeonnage de la partie inférieure d'un manchon, à l'intérieur d'un tube périphérique d'un générateur de vapeur.
La figure 11 est une vue en perspective des éléments de guidage de l'outillage représenté sur les figures 10 et 10a.
La figure 12 est une vue en coupe transversale des éléments de guidage représentés sur la figure 11.
La figure 13 est une vue en coupe suivant XIII-XIII de la figure 10a montrant le chariot de l'outillage représenté les figures 10 et 10a.
La figure 13a est une vue suivant A de la figure 13.

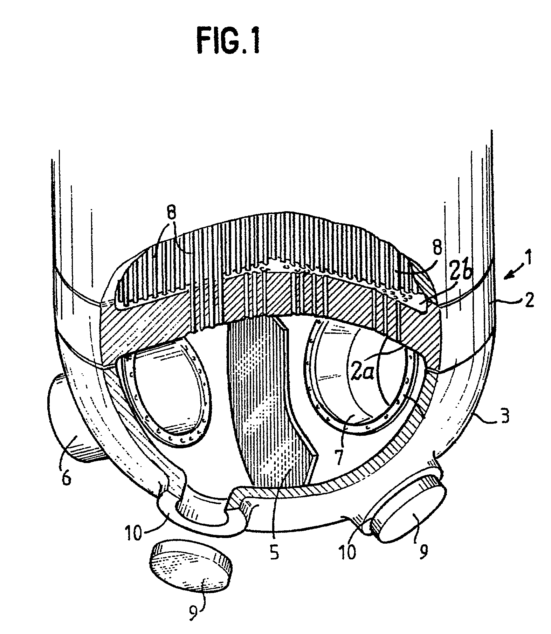

Sur la figure 1, on voit un générateur de vapeur 1 comportant une plaque tubulaire 2 de forte épaisseur sous laquelle est fixée la partie inférieure du générateur de vapeur constituant une boîte à eau 3. La boîte à eau 3 de forme hémisphérique est séparée en deux parties par une cloison 5. L'eau sous pression à haute température du réacteur nucléaire pénètre dans une des parties de la boîte à eau par une tubulure 6 puis circule dans les tubes 8 du faisceau du générateur de vapeur, d'abord de bas en haut puis de haut en bas pour ressortir dans la seconde partie de la boîte à eau dans laquelle débouche une tubulure 7 reliée au circuit primaire du réacteur nucléaire pour le retour de l'eau sous pression à la cuve du réacteur.
Les tubes 8 du faisceau comportent des branches parallèles de grande longueur et sont pliés en U à leur partie supérieure non représentée. Ces tubes 8 constituent un faisceau au-dessus de la plaque tubulaire 2 dont la section transversale est sensiblement circulaire. Les tubes constituent un réseau régulier dans les sections transversales du faisceau qui corespond au réseau des trous traversant la plaque tubulaire dans lesquels sont engagées les extrémités des tubes 8.
Chacune des branches des tubes 8 du faisceau est engagée par son extrémité dans la plaque tubulaire de façon à affleurer la face inférieure 2a de la plaque tubulaire et à ressortir par la face 2b constituant la face de sortie de cette plaque tubulaire. L'extrémité de chacune des branches des tubes engagée à l'intérieur de la plaque tubulaire 2 est sertie par dudgeonnage à l'intérieur de cette plaque tubulaire 2.

Les tubes 8 du faisceau dont les extrémités traversent la plaque tubulaire dans sa zone périphérique ont une longueur supérieure aux tubes dont les extrémités traversent la plaque tubulaire dans des zones plus centrales et seront appelés par la suite tubes périphériques.

Chacune des parties de la boîte à eau 3 est munie d'une ouverture de visite 10 qui peut être fermée par une tape 9.

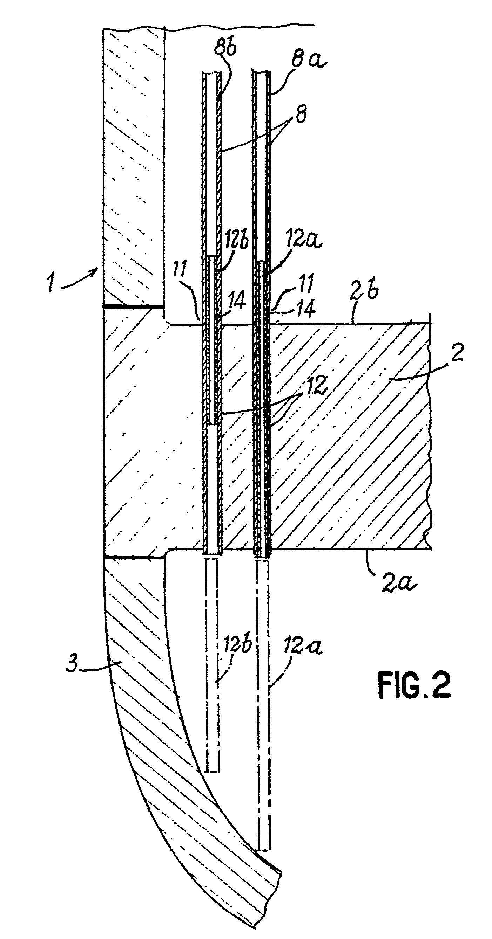

Sur la figure 2, on voit une partie de la plaque tubulaire 2 qui est traversée par les extrémités de deux tubes 8a et 8b, le tube 8b étant dans une position plus proche de la périphérie que le tube 8a.

Le tube 8a situé dans une zone plus centrale du faisceau que le tube 8b a été chemisé en utilisant un manchon 12a, par un procédé suivant l'art antérieur.

Au contraire, le tube 8b qui constitue un tube périphérique a été chemisé en utilisant un manchon 12b, par le procédé selon l'invention.

Dans les deux cas, le tube 8 comporte une fissure 14 dans la zone 11 située au-dessus de la face de sortie 2b de la plaque tubulaire 2. Cette zone 11 correspond sensiblement à la zone de transition entre la partie du tube 8 déformée par dudgeonnage à l'intérieur de la plaque tubulaire et la partie du tube non déformée. Le manchon 12 doit donc recouvrir la zone 11 sur toute sa longueur et être fixé de façon étanche, à chacune de ses extrémités, sur la surface intérieure du tube 8. De cette façon une séparation entre le fluide primaire circulant dans les tubes 8 et le fluide secondaire venant en contact avec la surface extérieure des tubes 8 est assurée par le manchon 12.

Dans le procédé selon l'art antérieur appliqué aux tubes tels que le tube 8a qui ne se trouve pas à la périphérie du faisceau, on utilise un manchon de chemisage 12a d'une longueur sensiblement supérieure à l'épaisseur de la plaque tubulaire. En effet, le manchon 12a, en position dans le tube 8, a son extrémité inférieure au niveau de l'extrémité inférieure du tube 8 qui affleure la face d'entrée 2a de la plaque tubulaire et sa longueur est en conséquence égale à l'épaisseur de la plaque tubulaire augmentée d'une longueur un peu supérieure à la longueur de la zone de transition 11. Dans le cas d'une plaque tubulaire d'un épaisseur de 0,53 mètre, on utilise ainsi un manchon 12 d'une longueur de 0,70 mètre. Un tel manchon 12a peut être présenté en position verticale endessous de l'extrémité du tube 8 affleurant la face d'entrée 2a de la plaque tubulaire, dans le cas de tubes qui ne sont pas situés à la périphérie du faisceau. On a représenté en traits mixtes, sur la figure 2, en-dessous du tube 8a et dans l'axe de ce tube, la position du manchon 12a avant son introduction dans le tube 8a.

Le procédé selon l'invention se caractérisé tout d'abord par l'utilisation d'un manchon 12b d'une longueur réduite par rapport au manchon utilisé dans les techniques de chemisage selon l'art antérieur. Ce manchon 12b présente une longueur sensiblement inférieure à l'épaisseur de la plaque tubulaire pour pouvoir être introduit dans les tubes périphériques. On a représenté, en traits mixtes, sur la figure 2, en-dessous du tube 8b, la position d'un manchon court 12b, à la verticale du tube 8b, dans une position permettant son introduction dans ce tube.

Un tel manchon 12b, dans le cas d'une plaque tubulaire d'une épaisseur de 0,53 mètre, aura avantageusement une longueur de 0,40 mètre.

Dans sa position de chemisage à l'intérieur du tube, le manchon 12b a son extrémité supérieure placée au-dessus de la zone de transition 11, si bien que son extrémité inférieure se trouve à l'intérieur de la plaque tubulaire 2, dans une zone éloignée de la face d'entrée 2a et située de préférence à proximité de la fibre neutre de la plaque tubulaire.

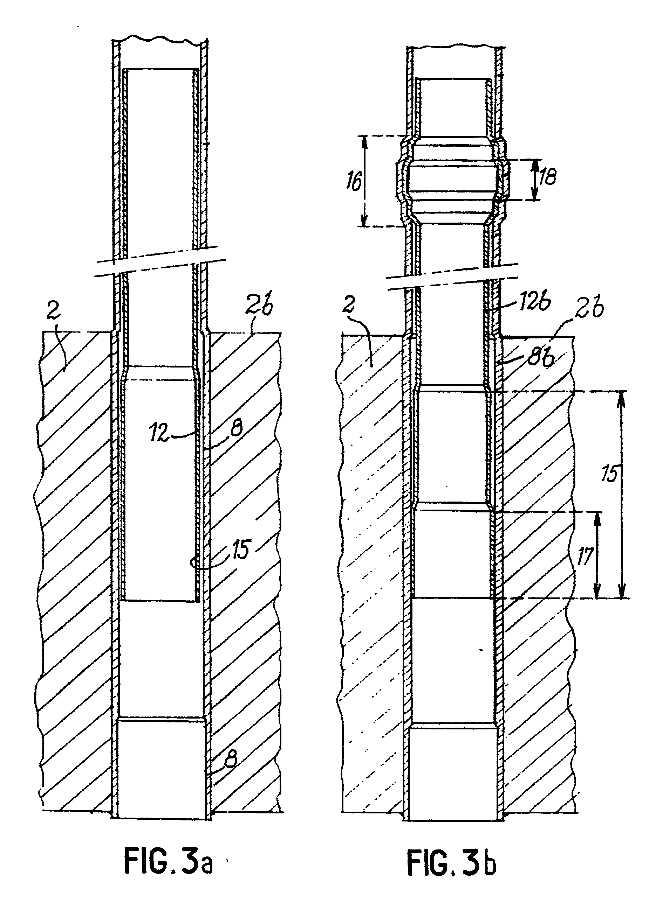

Sur les figures 3a et 3b, on voit le manchon 12b à l'intérieur du tube périphérique 8b dont on assure le chemisage, dans une phase initiale et à la fin du chemisage, respectivement.

La procédé de chemisage suivant l'invention caractérisé par l'utilisation d'un manchon court et par la disposition de ce manchon dans le tube à chemiser, de façon que l'une de ses extrémités soit dans une position éloignée de la face d'entrée de la plaque tubulaire, comporte par ailleurs des étapes connues des procédés de l'art antérieur.

Le manchon 12 est tout d'abord introduit dans le tube 8 dans la position représentée sur la figure 3a. Cette introduction ainsi que les autres phases du procédé de chemisage peuvent être réalisées en utilisant le procédé et les outillages de chemisage à distance décrits dans une demande de brevet de la Société FRAMATOME déposée le même jour que la présente demande de brevet.

Ce procédé et les outillages correspondants permettent en particulier d'introduire le manchon 12 à la hauteur voulue dans le tube 8, avec un contrôle très précis de sa position depuis l'extérieur de la boîte à eau.

Le manchon 12 introduit dans le tube renferme un expanseur hydraulique commandé depuis l'extérieur de la boîte à eau permettant d'effectuer une expansion diamétrale du manchon 12 dans deux zones voisines de ses extrémités. Sur la figure 3a, on a représenté une zone inférieure 15 du manchon 12 ayant subi une expansion diamétrale à l'intérieur du tube 8 dans sa partie située à l'intérieur de la plaque tubulaire 2. Cette expansion diamétrale est poursuivie jusqu'au moment où la surface extérieure du manchon 12 vient en contact avec la surface intérieure du tube 8.

Une expansion diamétrale par voie hydraulique du manchon 12 est également efectuée dans une zone voisine de son extrémité supérieure, à l'intérieur du tube 8, dans sa partie située au-dessus de la face de sortie 2b de la plaque tubulaire.

Le manchon 12 est alors parfaitement maintenu en place dans le tube 8 et la phase suivante du chemisage consiste à effectuer un dudgeonnage du manchon 12 à l'intérieur du tube 8, dans sa partie supérieure située au-dessus de la plaque tubulaire. Cette opération de dugeonnage peut être effectuée en utilisant le procédé et le dispositif de chemisage à distance décrit dans la demande de brevet mentionnée ci-dessus. Pour cela, un outil de dudgeonnage est intro duit dans le manchon 12 en position à l'intérieur du tube 8, depuis l'extérieur de la boîte à eau, grâce à un tube souple à l'extrémité duquel est fixé l'outil de dudgeonnage et à un ensemble de guidage comportant en particulier un tube flexible. La commande et la motorisation des galets de l'outil de dudgeonnage sont assurées depuis l'extérieur de la boîte à eau, grâce à un flexible passant dans le tube souple.

On réalise donc, grâce à cet outillage, un dudgeonnage dans une zone 18 du manchon à l'intérieur de la zone 16 ayant subi préalablement une expansion diamétrale.

Le chemisage soit être enfin complété par un dudgeonnage du manchon 12 dans une zone 17 située à l'intérieur de la zone 15 ayant subi préalablement une expansion diamétrale, dans la partie inférieure du manchon.

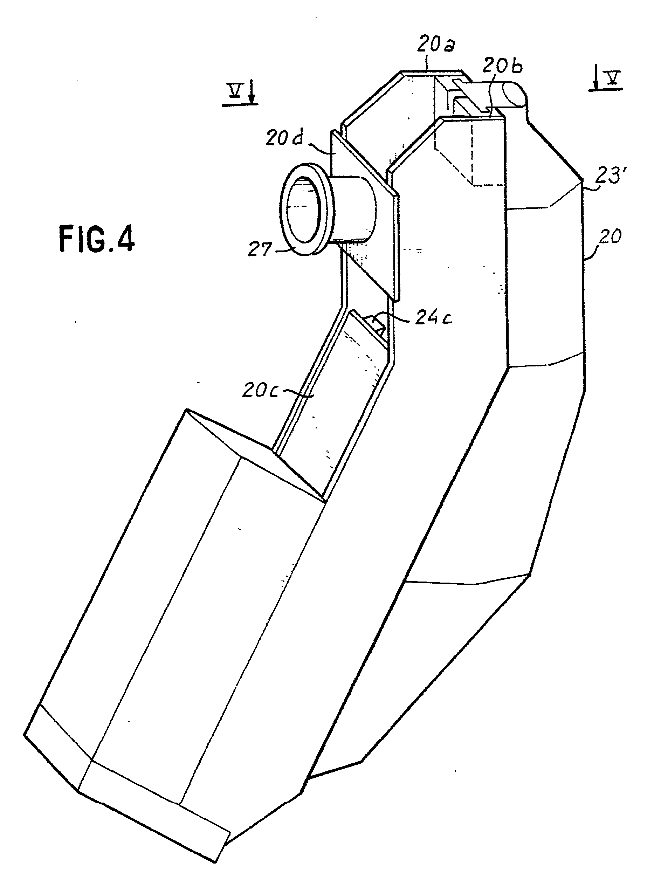

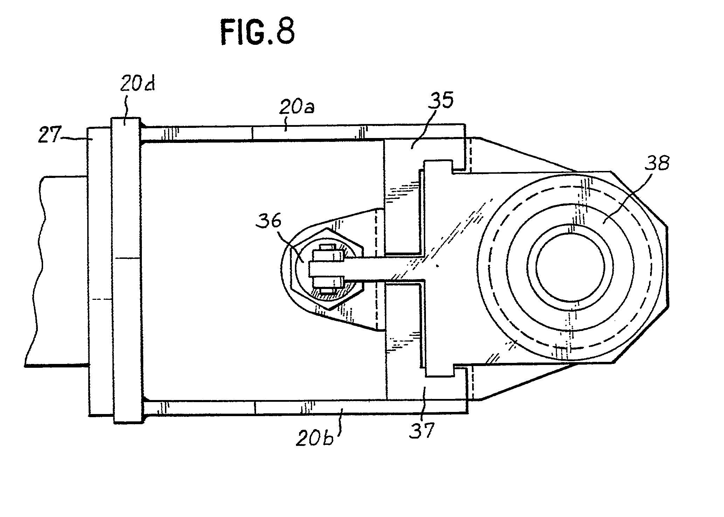

Cette dernière opération peut être réalisée avantageusement en utilisant un des dispositifs selon la présente demande de brevet qui seront décrits en se référant aux figures 4 à 13.

Il est bien évident également que le procédé de chemisage d'un tube périphérique suivant l'invention pourrait être mis en oeuvre en utilisant d'autres dispositifs et d'autres procédés que ceux décrits dans la demande de brevet mentionnée ci-dessus.

Les différentes opérations d'expansion et de dudgeonnage pourraient être réalisées grâce à une machine à commande automatique introduite dans la boîte à eau du générateur de vapeur ou encore manuellement par un opérateur travaillant depuis la boîte à eau et disposant d'outillages manuels, dans la mesure où les outillages pourraient être introduits dans un tube périphérique et réaliser un dudgeonnage dans une zone éloignée de la face d'entrée de la plaque tubulaire.

Sur les figures 4 à 8, on voit un dispositif permettant de réaliser le dudgeonnage de la partie inférieure 17 d'un manchon 12 introduit dans un tube péreiphérique 8 d'un générateur de vapeur.

Le dispositif comporte un bâti 20 mécanosoudé de forme courbe à l'intérieur duquel se déplace un chariot 21 portant une dudgeonneuse 22 reliée par un tube souple 23 à un outil rigide de dudgeonnage 24.

Le bâti 20 comporte deux flasques latéraux 20a et 20b reliés à l'une de leurs extrémités par une plaque de fermeture 20c et à leur autre extrémité par un fond rapporté de forme courbe 23'. Les flasques 20a et 20b portent deux pistes courbes 24a et 24b saillantes par rapport à la face interne des flasques 20a et 20b respectivement.

La plaque de fermeture 20a porte de plus une piste de guidage centrale 24c sur sa face interne.

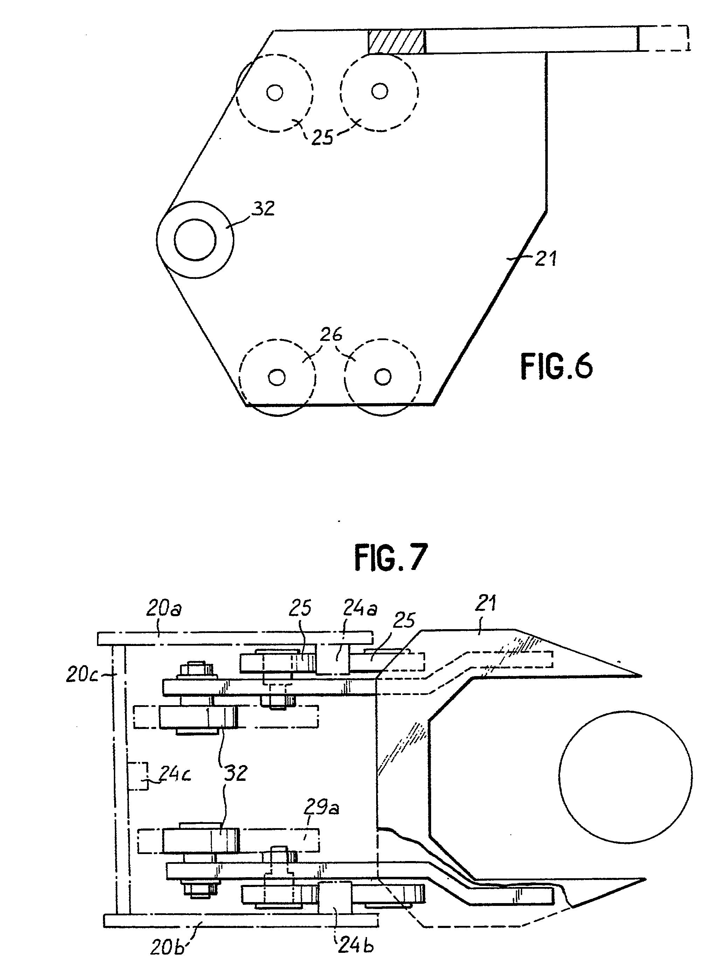

Le chariot 21 comporte un châssis ouvert en forme de U et quatre roues latérales telles que 25 et 26 visibles sur les figures 6 et 7 sur chacune de ses faces.

Le châssis 20 de l'outillage est relié par l'intermédiaire d'un dispositif de fixation 27 soudé sur une plaque 20d solidaire des flasques 20a et 20b, à l'extrémité du bras en deux parties articulées d'une machine de manutention connue de l'art antérieur, introduite dans la boîte à eau du générateur de vapeur pour les opérations de chemisage et permettant de présenter un outillage fixé à l'extrémité de son bras dans une position à la verticale d'un tube 8 quelconque du générateur de vapeur, endessous de la face d'entrée 2a de la plaque tubulaire.

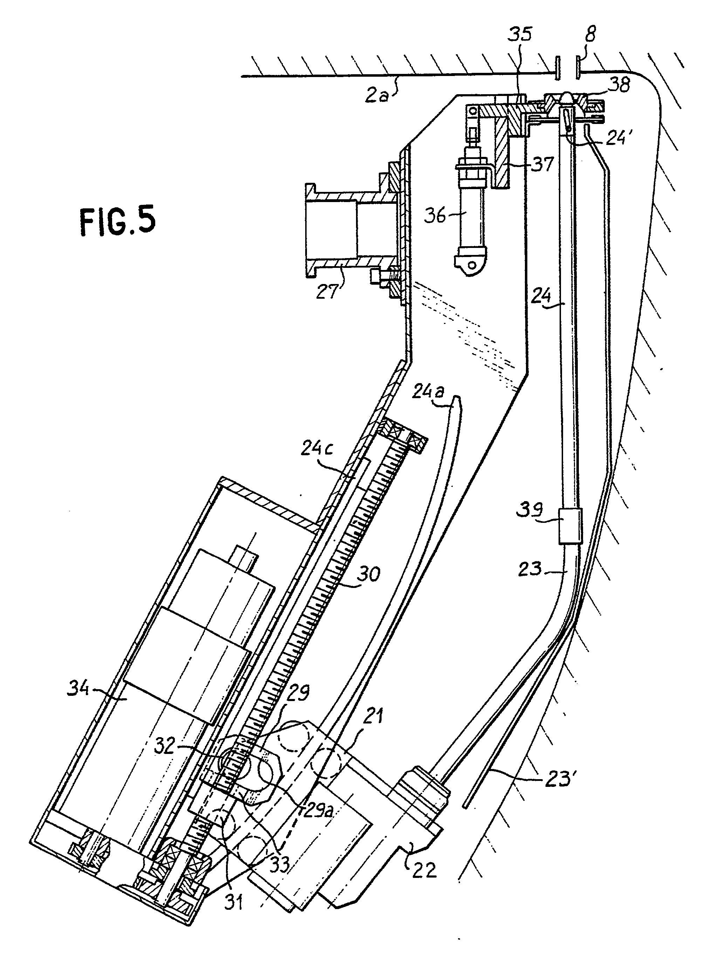

Sur la figure 5, l'outillage de dudgeonnage a été placé dans une position permettant l'introduction du dudgeon 24 dans un tube 8 renfermant un manchon 12 dont on a effectué préalablement l'expansion diamétrale.

Le chariot 21 est relié par une attache 29 en forme de U à un ensemble vis-écrou 30-31. Les deux côtés parallèles de l'attache 29 présentent une lumière oblongue telle que 29a, dans laquelle coulisse un galet de centrage 32. Deux galets 32 sont montés sur les faces latérales en regard du chariot 21 et sont introduits chacun dans une lumière oblongue 29a. La troisième face 33 de l'attache 29 porte l'écrou 31 qui est en prise avec la vis 30. La vis 30 est mise en rotation par un moteur 34, par l'intermédiaire de pignons.

Le déplacement de l'écrou 31 le long de la vis 30 provoque le déplacement du chariot 21 qui est relié à l'attache 29. Pendant le déplacement, le chariot 21 roule sur les pistes courbes 24a et 24b et l'attache 29 est guidée par la piste 24c. Les lumières oblongues 29a permettent un rattrapage de la déviation du chariot 21 dans une direction perpendiculaire à la vis 30, pendant son déplacement entre sa position basse et sa position haute et inversement.

Sur la figure 5, on voit le dispositif permettant d'appliquer le dispositif de guidage et d'appui 38 de l'outillage, sur la face 2a de la plaque tubulaire. Le dispositif 38 est monté flottant sur un coulisseau 35 actionné par un vérin 36 et guidé par un support 37 fixé sur les deux flasques 20a et 20b du châssis 20.

Le fond rapporté 23' du bâti 20 permet de guider le tube souple 23 reliant la dudgeonneuse 22 à l'outil de dudgeonnage rigide 24, pendant la mise en place de la dudgeonneuse équipée de son dudgeon sur le chariot positionné pour cette opération dans la partie inférieure du châssis 20.

Le tube souple 23 permet le passage d'un flexible joignant les moyens moteurs de la dudgeonneuse 22 à une aiguille de forme tronconique permettant l'entraînement en rotation et la sortie radiale des galets 24a de l'outil de dudgeonnage 24. L'outil de dudgeonnage 24 comporte en effet, de manière connue, des galets 24a montés rotatifs dans une cage faisant partie du corps de l'outil de dudgeonnage et une aiguille passant à l'intérieur du corps, entre les galets, cette aiguille étant entraînée en rotation et poussée contre les galets grâce à un moteur et à un vérin constituant la motorisation de la dudgeonneuse 22.

L'outillage représenté sur les figures 4 à 7 peut être utilisé aussi bien pour réaliser le dudgeonnage de la partie supérieure d'un manchon 12, dans sa zone 18 visible sur la figure 3b que pour réaliser le dudgeonnage de ce manchon 12 dans sa zone inférieure 17, située à l'intérieur de la plaque tubulaire 2.

Pour effectuer le dudgeonnage de la partie supérieure du manchon, l'outillage est équipé, dans sa partie supérieure, du dispositif de guidage 38 dont l'ouverture est suffisante pour permettre le passage de l'outil de dudgeonnage 24, du raccord de liaison 39 de cet outil au tube souple 23 et de ce tube souple 23.

Dans une première phase, la bras de manutention en deux parties articulées permet de venir placer l'outillage dans la position représentée sur la figure 5, à la verticale exacte du tube périphérique 8 à l'intérieur duquel a été placé un manchon 12 qui a subi ultérieurement une expansion diamètrale.

On commande alors le mouvement vers le haut du chariot 21 par l'intermédiaire du moteur 34. Le déplacement du chariot 21 permet le mouvement vers le haut de l'outillage 24 et son introduction dans le tube 8, jusqu'au moment où le raccord 39 vient en appui sur l'extrémité du manchon 12, à l'intérieur du tube 8. L'arrêt du chariot est alors commandé automatiquement et la dudgeonneuse est mise en fonctionnement. La longueur de la partie rigide de l'outil de dudgeonnage 24 est choisie pour que le dudgeonnage soit bien effectué dans la zone 18 tel que représenté sur la figure 3b.

Dans le cas d'une opération de dudgeonnage de la partie inférieure du manchon 12, à l'intérieur de la plaque tubulaire, le raccord 39 est remplacé par une butée à bille ce qui permet d'éviter l'utilisation de butées tournantes situées à l'intérieur du dudgeon rigide 24. La butée à billes coopère avec le dispositif de guidage 38 monté flottant pour arrêter l'outil de dudgeonnage 24 dans une position basse, lors du mouvement vers le haut du chariot 21 ; les galets de dudgeonnage 24' sont alors dans la zone 17 représentée sur la figure 3b.

Dans les deux cas, les déplacements du chariot 21 et la mise en oeuvre de la dudgeonneuse sont commandés à distance depuis l'extérieur de la boîte à eau.

L'outillage représenté sur les figures 4 à 8 permet de réaliser aussi bien le dudgeonnage dans la partie supérieure du manchon à l'extérieur de la plaque tubulaire 2 que dans la partie inférieure du manchon à l'intérieur de la plaque tubulaire. Dans le premier cas, les contraintes mises en jeu lors du dudgeonnage sont relativement faibles alors qu'elles sont beaucoup plus fortes dans le second cas. Cependant, la transmission de la force motrice entre la dudgeonneuse 22 et l'outil de dudgeonnage 24, se fait par une portion de flexible de faible longueur passant à l'intérieur du tube souple 23. Un couple et une poussée relativement importants peuvent donc être transmis par cette portion de flexible courte. En outre, pendant les opérations de dudgeonnage, la portion de tube souple 23 est dans une disposition sensiblement rectiligne, aussi bien dans le cas du dudgeonnage de la partie supérieure que dans le cas du dudgeonnage de la partie inférieure du manchon.

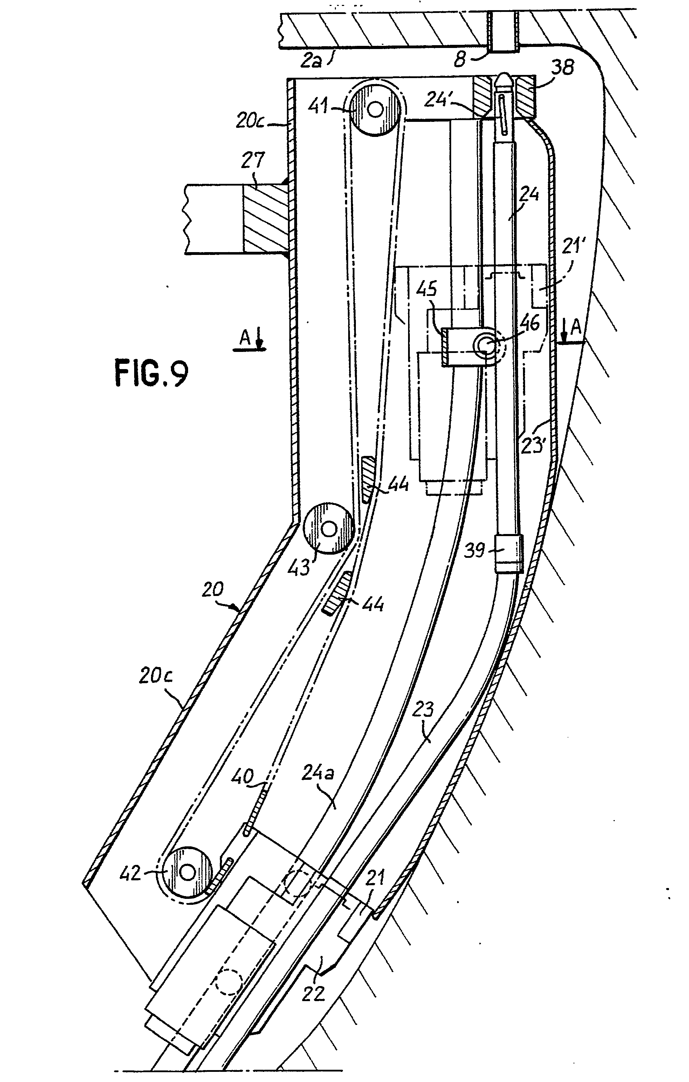

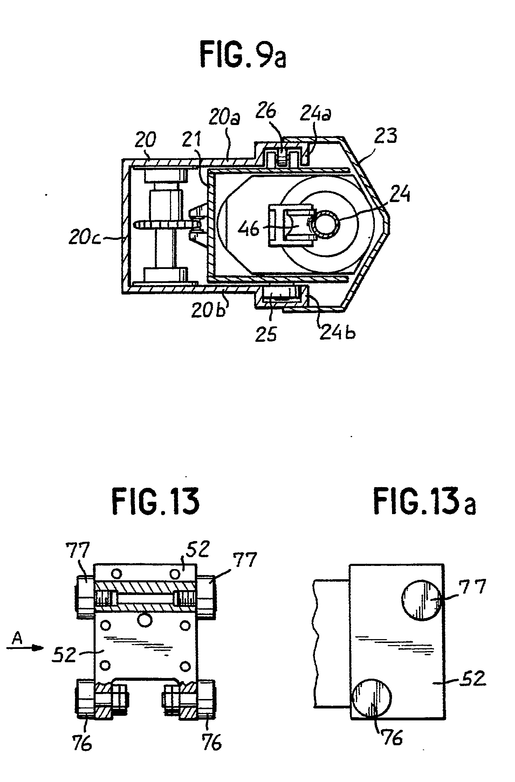

Sur les figures 9 et 9a, on a représenté un second mode de réalisation d'un outillage permettant de réaliser le dudgeonnage d'un manchon. Ce mode de réalisation ne diffère du mode précédent que par l'utilisation d'un ensemble d'entraînement à pignons et à chaîne au lieu d'un ensemble à vis et écrou pour effectuer les déplacements du chariot dans un sens et dans l'autre. Les éléments correspondants sur les figures 9 et 9a d'une part et 4 à 8 d'autre part portent les mêmes repères.

Les pistes courbes 24a et 24b sont, dans ce mode de rélisation, constituées par une partie creuse des flasques 20a et 20b respectivement et les roues latérales 25 et 26 du chariot 21 sont guidées à l'intérieur de ces pistes. Les roues 25 assurent le guidage longitudinal et les roues 26 le guidage transversal.

Le chariot 21 est relié à une chaîne sans fin 40 dont le parcours est défini par une poulie motrice 41, une poulie de renvoi 42, une poulie de déflection 43 et des patins de guidage. Ce parcours permet de suivre, compte tenu de la souplesse de la chaîne 40, le parcours des pistes courbes 24a et 24b assurant le guidage du chariot 21.

Le chariot 21 peut ainsi être déplacé à l'intérieur du bâti 20 de l'outillage, entre une position basse, à l'entrée du bâti 20 et représentée en traits pleins et une position haute 21' représentée en pointillés. La poulie motrice 41 est en effet reliée à un moteur permettant de la faire tourner dans un sens ou dans l'autre pour déplacer le chariot vers le haut ou vers le bas.

Le bâti 20 porte également par l'intermédiaire d'un support 45 une poulie 46 à axe horizontal permettant le guidage de l'outil de dudgeonnage 24 et du tube souple 23, pendant les déplacements du chariot 21 entraînant la dudgeonneuse 22.

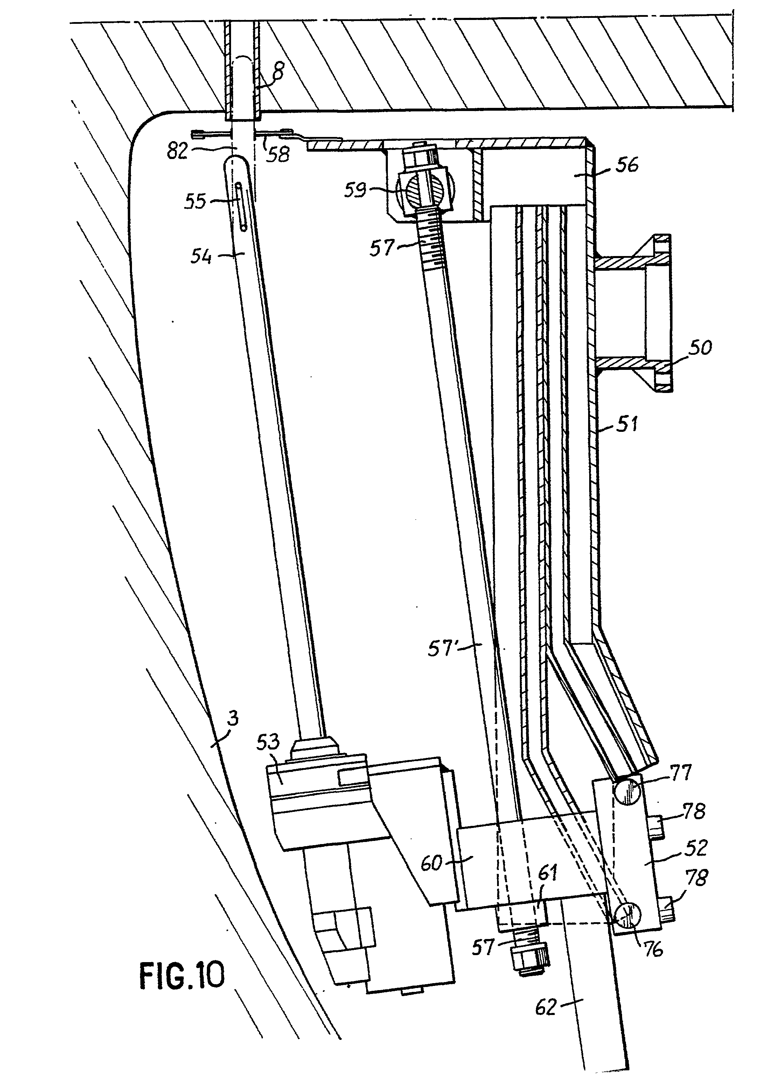

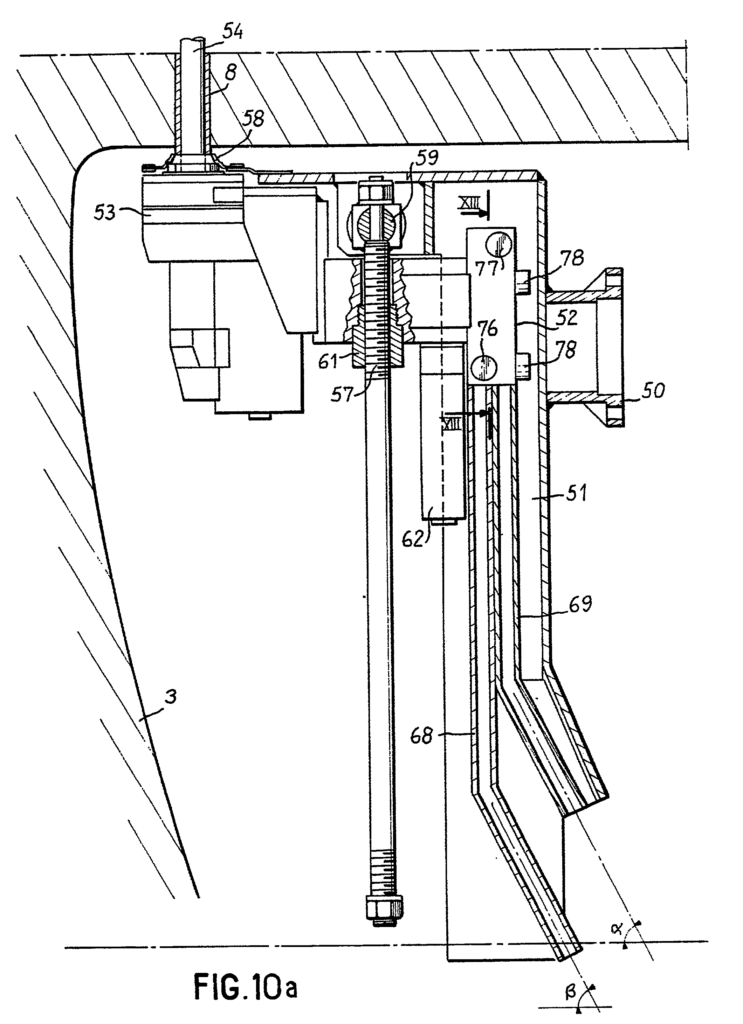

Sur les figures 10 à 13, on a représenté un second mode de réalisation d'un outillage permettant de réaliser le dudgeonnage de la partie inférieure d'un manchon de chemisage d'un tube périphérique d'un générateur de vapeur. Cet outillage est fixé à l'extrémité du bras 50 d'une machine de manutention introduite dans la boîte à eau 3 d'un générateur de vapeur et comportant un bras en deux parties articulées permettant de placer un outillage à la verticale d'un tube quelconque du générateur de vapeur.

Cet outillage comporte un bâti 51, un chariot 52 susceptible de se déplacer dans le bâti et portant la dudgeonneuse 53 comprenant un outil de dudgeonnage rigide 54 à l'extrémité duquel sont montés les galets de dudgeonnage 55.

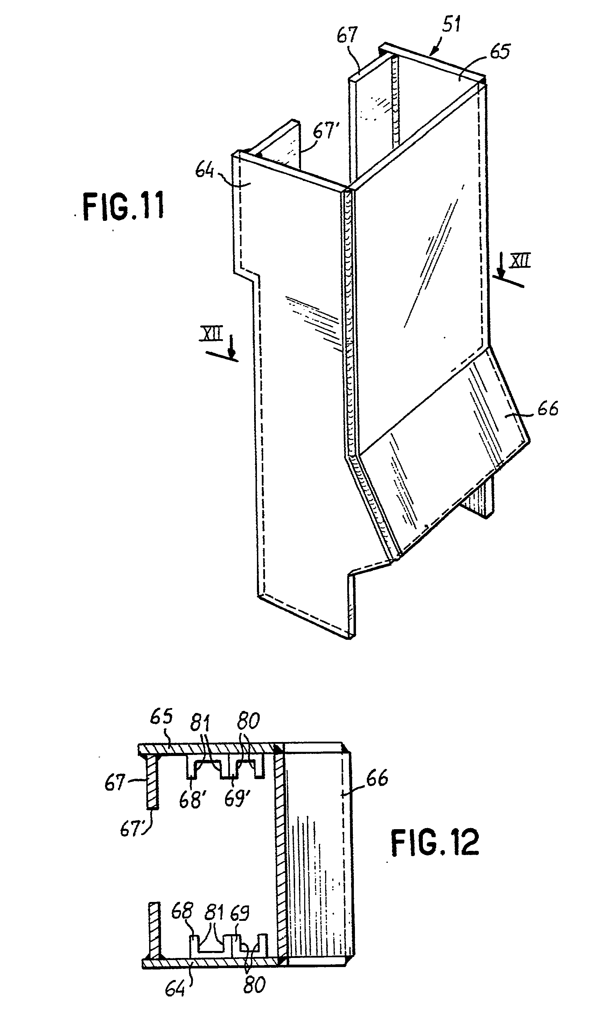

A la partie supérieure du bâti de guidage 51 qui sera décrit plus en détail en se référant aux figures 11 et 12 est fixé un support 56 portant à son extrémité un élément de guidage 58 et sur lequel est montée, articulée autour d'un axe horizontal 59, une vis 57 de grande longueur.

La dudgeonneuse 53 est solidaire du chariot 52 par l'intermédiaire d'un support 60 portant également un écrou d'entraînement 61 engagé sur la vis 57 et un moteur électrique 62 permettant l'entraînement de l'écrou 61, par l'intermédiaire d'un ensemble de pignons.

La mise en rotation de l'écrou 61 par le moteur 62 permet de déplacer le chariot 52 le long des moyens de guidage du bâti 51.

Comme il est visible sur les figures 11 et 12, le bâti de guidage 51 comporte deux faces latérales verticales 64 et 65, une face frontale 66 partiellement verticale et partiellement inclinée et une face arrière 67 ouverte partiellement en 67' pour permettre le passage de la partie de liaison du support 60 du chariot.

Les faces latérales 64 et 65 portent chacune deux glissières 68, 68' et 69, 69' de guidage latéral. Ces glissières sont constituées par des profilés en U à faces parallèles. Elles sont verticales et parallèles dans la partie haute du bâti, inclinées avec des angles α et β différents dans la partie basse du bâti (figure 10a).

Le chariot 52 visible à la figure 13 comporte deux trains de roues 76 et 77, dans des plans verticaux parallèles différents, espacés d'une distance égale à l'écartement des glissières 68 et 69.

Le chariot 52 comporte de plus quatre roues de guidage longitudinal 78 visibles sur les figures 10 et 10a. Ces roues 78 sont montées suivant un axe perpendiculaire à l'axe des roues 76 et 77.

Sur la figure 10a, on a représenté le chariot 42 et l'outil de dudgeonnage dans leur position haute.

Lors de l'engagement du chariot 52 dans le dispositif de guidage 51 (figure 10), les roues 76 et 77 viennent s'engager sur les pistes inclinées 80 et 81 ménagées entre les faces parallèles internes des glissières 69, 69' et 68, 68', vers l'extérieur du dispositif de guidage. Les roues 76 viennent s'engager sur les pistes inclinées 80 et 81 ménagées entre les faces parallèles internes des glissières 68, 68'. Ces pistes 80 et 81 sont visibles en particulier sur la figure 12.

Sous l'effet du poids de la dudgeonneuse 53 et de son support 60, l'ensemble du dispositif suspendu à la vis 57 monté articulé à sa partie supérieure s'incline vers la gauche et se trouve maintenu dans une position inclinée lui permettant d'accomoder la courbure de la boîte à eau 3, grâce à la pente des rampes de guidage 80 et 81. La vis 57 occupe alors une position inlcinée 57' (figure 10).

Le mouvement vers le haut du chariot 52, du support 60 et de l'outillage 53 est obtenu par mise en rotation du moteur 62 entraînant l'écrou 61.

L'ensemble de ce dispositif est constamment guidé par les rampes inclinées 80 et 81 de façon que la dudgeonneuse 53 et son outillage 54 puissent se déplacer par un mouvement conjugué de translation verticale et de rotation autour d'un axe horizontal. L'outillage rigide 54 de la dudgeonneuse se place progressivement, pendant le déplacement du chariot 52 vers le haut, suivant la direction verticale 82 correspondant à l'axe du tube 8 dans lequel on effectue le dudgeonnage. Cet alignement de l'outil 54 avec l'axe 82 est obtenu lorsque le chariot 52 parvient à l'entrée des parties verticales des rampes 80 et 81 ménagées entre les glissières 69 et 69' et 68 et 68' respectivement.

La vis 57 occupe la position verticale représentée sur la figure 10a.

Le mouvement du chariot 52 et de la dudgeonneuse 53, 54 se poursuit alors dans la direction verticale, l'outillage 54 passant d'abord dans le dispositif de centrage 58 puis dans le tube 8 jusqu'au moment où la dudgeonneuse 53 vient dans sa position haute en butée sur le dispositif de centrage 58.

La partie supérieure de l'outil de dudgeonneuse 54 comportant les galets 55 est alors parfaitement positionnée pour réaliser l'opération de dudgeonnage dans la partie inférieure expansée manchon 12 à l'intérieur du tube 8.

On commande depuis l'extérieur de la boîte à eau, les moyens moteurs de la dudgeonneuse 53 pour réaliser le dudgeonnage voulu. Le couple et la poussée sont transmis par les moyens moteurs de la dudgeonneuse 53 à l'extrémité de l'outil de dudgeonnage comportant les galets 55, par une tige rigide de faible longueur. Il est donc possible de transmettre des couples et une poussée importante et donc d'exercer des forces importantes sur les galets de dudgeonnage 55.

Il apparaît donc qu'aussi bien les dispositifs représentés sur les figures 4 à 8 et 9 et 9a que le dispositif représenté sur les figures 10 à 13 permettent d'une part d'introduire de façon automatique et sûre un outil de dudgeonnage dans un tube périphérique d'un générateur de vapeur, malgré la courbure de la surface interne de la boîte à eau et d'autre part d'exercer des forces importantes sur les galets de l'outil de dudgeonnage.

Ces dispositifs sont donc tout particulièrement utiles dans le cas du dudgeonnage de la partie inférieure du manchon qui requiert des forces importantes.

Cependant, il est possible d'utiliser également les dispositifs représentés sur les figures 4 à 8 et 9 et 9a pour réaliser le dudgeonnage de la partie supérieure du manchon, à l'extérieur de la plaque tubulaire, opération qui nécessite la mise en oeuvre de forces moins importantes.

Les avantages du procédé et du dispositif suivant l'invention sont de permettre de réaliser le chemisage des tubes périphériques du faisceau d'un générateur de vapeur, lorsque ces tubes sont défectueux et d'accroître ainsi considérablement les possibilités d'intervention pour effectuer des réparations permettant d'éviter de diminuer la surface d'échange du générateur de vapeur.

Grâce au procédé et au dispositif selon l'invention, il devient possible de réaliser le chemisage de la plus grande partie des tubes périphériques du faisceau d'un générateur de vapeur, seul un très faible pourcentage des tubes situés à la périphérie extrême du faisceau ne pouvant être chemisés même en utilisant un manchon court et un outillage adapté suivant l'invention.

L'invention ne se limite pas aux modes de réalisation qui ont été décrits ; elle en comporte au contraire toutes les variantes.

C'est ainsi qu'on peut utiliser des manchons courts d'une longueur un peu différente de celle qui a été indiquée ci-dessus, cette longueur devant cependant toujours se situer dans un intervalle compris entre 40 et 80 % de l'épaisseur de la plaque tubulaire.

Les différentes opérations du chemisage peuvent être effectuées de façon manuelle, de façon automatique ou de façon semi-automatique. Cependant, l'expansion du manchon et le dudgeonnage de sa partie supérieure seront réalisés avantageusement en utilisant le procédé et le dispositif de chemisage à distance faisant l'objet de la demande de brevet déposée par FRAMATOME le même jour que la présente demande de brevet.

Il est bien évident également que le dudgeonnage de la partie inférieure du manchon peut être effectué par d'autres moyens que ceux qui ont été décrits, manuels ou automatiques, à partir du moment où ces moyens peuvent être introduits dans les tubes périphériques du faisceau.

La position du manchon court à l'intérieur du tube à chemiser peut être variable, en fonction de la longueur du manchon par rapport à l'épaisseur de la plaque, de la longueur de la zone de transition du tube à chemiser et de la position de la zone fissurée. Cependant, dans le procédé de chemisage suivant l'invention, l'extrémité inférieure du manchon sera placée de préférence dans une zone située approximativement dans la partie centrale de la plaque tubulaire, c'est-à-dire approximativement à égale distance de la face d'entrée 2a et de la face de sortie 2b de cette plaque tubulaire.

Enfin, le procédé et le dispositif suivant l'invention s'appliquent non seulement au chemisage des générateurs de vapeur des réacteurs nucléaires à eau sous pression mais également au chemisage de tout générateur de vapeur comportant une boîte à eau de forme hémisphérique située d'un côté de la plaque tubulaire et un faisceau de tubes à section sensiblement circulaire dans laquelle les tubes sont répartis régulièrement.

**Revendications**

1. Procédé de chemisage d'un tube périphérique d'un générateur de vapeur comportant un faisceau à tubes parallèles (8) ayant une section transversale de forme sensiblement circulaire dans laquelle les tubes (8) sont régulièrement répartis, ces tubes étant sertis à leurs extrémités dans une plaque tubulaire (2) circulaire, sur toute l'épaisseur de cette plaque, de façon à être saillants par rapport à l'une des faces (2b) de la plaque appelée face de sortie et à affleurer l'autre face (2a) ou face d'entrée, en-dessous de laquelle le générateur de vapeur constitue une boîte à eau (3) de forme hémisphérique, les extrémités des tubes périphériques affleurant la face d'entrée de la plaque tubulaire étant situées à proximité de la paroi de la boîte à eau et le procédé de chemisage comportant, de manière connue, l'introduction d'un manchon (12) dans le tube (8) par l'une de ses extrémités, depuis la face d'entrée (2a) de la plaque tubulaire (2), la fixation par expansion diamétrale du manchon (12) à l'intérieur du tube (8) dans au moins deux zones situées au voisinage de ses extrémités, et le sertissage par dudgeonnage du manchon (12) dans chacune des zones d'expansion, caractérisé par le fait que le dudgeonnage du manchon (12) est effectué dans une zone du tube (8) située à l'intérieur de la plaque tubulaire dans une position sensiblement équidistante des faces (2a et 2b) de la plaque tubulaire, à proximité de la fibre neutre de la plaque tubulaire et dans une zone située au-delà de la face de sortie (2b) de la plaque tubulaire, le manchon (12) présentant une longueur comprise entre 40 et 80% de l'épaisseur de la plaque tubulaire.

2. Procédé de chemisage suivant la revendication 1, caractérisé par le fait que dans le cas où la plaque tubulaire (2) a une épaisseur un peu supérieure à 0,50 mètre, le manchon (12) a une longueur voisine de 0,40 mètre.

3. Dispositif de manutention et de dudgeonnage pour la mise en œuvre du procédé selon l'une quelconque des revendication 1 et 2, caractérisé par le fait qu'il comporte:
   - un bâti courbe (20) constitué de deux flasques latéraux (20a, 20b) plans et un fond de forme courbe (23') relié à chacun des flasques (20a, 20b),
   - une glissière de guidage courbe (24a, 24b) associée à chacun des flasques latéraux (20a, 20b),
   - un chariot (21) monté mobile dans le bâti (20) et guidé suivant une trajectoire courbe suivant sensiblement la paroi intérieure de la boîte à eau (3), grâce à des roues (25, 26) coopérant avec les glissières de guidage (24a, 24b) du bâti (20),
   - un moyen d'entraînement (30, 31, 40, 41) du chariot (21) le long des glissières courbes (24a, 24b), dans un sens et dans l'autre,
   - un ensemble de dudgeonnage dont les moyens moteurs (22) sont portés par le chariot (21) comportant un outil de dudgeonnage rigide (24) relié aux moyens moteurs portés par le chariot, par un tube souple (23) à l'intérieur duquel est placé un flexible d'entraînement de l'outil de dudgeonnage (24), à partir des moyens moteurs (22),
   - et un dispositif de guidage (38) de l'outil de dudgeonnage (24) à la sortie du bâti (20).

4. Dispositif suivant la revendication 3, caractérisé par le fait que l'outil de dudgeonnage rigide (24) est relié au tube souple (23) par un raccord (39) d'un diamètre tel qu'il constitue une butée d'arrêt de l'outillage (24) et du chariot (21) sur l'extrémité du manchon (12) située à l'intérieur de la plaque tubulaire (2).

5. Dispositif suivant la revendication 3, caractérisé par le fait que l'outil de dudgeonnage rigide (24) est relié au tube souple (23) par l'intermédiaire d'un raccord (39) constituant une butée tournante déterminant l'arrêt de l'outillage (24) et du chariot (21) lorsqu'il vient en appui sur le dispositif de guidage (38) à la sortie du bâti (20).

6. Dispositif suivant l'une quelconque des revendications 3, 4 et 5, caractérisé par le fait que le moyen d'entraînement (30, 31) est constitué par un ensemble à vis et écrou, dont l'écrou (31) est relié au chariot (21) par l'intermédiaire d'une attache (29) laissant au chariot une possibilité de débattement dans au moins une direction perpendiculaire à la vis (30) disposée suivant la longueur des glissières courbes (24a, 24b).

7. Dispositif suivant l'une quelconque des revendications 3, 4 et 5, caractérisé par le fait que le moyen d'entraînement (40, 41) est constitué par une chaîne (40) dont le parcours suit approximativement le parcours des glissières courbes (24a, 24b) et un pignon d'entraînement (41) engrénant avec la chaîne, le chariot est relié à la chaîne (40) par une attache (29).

8. Dispositif suivant la revendication 7, caractérisé par le fait qu'il comporte de plus une poulie de guidage (46) de l'outil de dudgeonnage (24) lors des déplacements du chariot (21).

9. Dispositif de manutention et de dudgeonnage pour la mise en œuvre du procédé suivant l'une quelconque des revendications 1 et 2, caractérisé par le fait qu'il comporte:

– un bâti de guidage (51) fixé au bras articulé (50), permettant de placer un outillage dans une position quelconque à la verticale d'un tube (8) du faisceau, et comportant des glissières (68, 69, 68′, 69′) constituant des rampes de guidage (80, 81) ayant au moins deux parties successives faisant entre elles un certain angle, la partie de rampe de guidage finale ayant la direction de l'axe du tube (8),

– une vis (57) articulée à l'une des extrémités du bâti (51) et disposée suivant toute la longueur de ce bâti (51),

– un chariot (52) muni de roues destinées à coopérer avec les rampes (80, 81), comportant un support (60) dans lequel est monté rotatif un écrou (61) engagé sur la vis (57) et entraîné par un moteur (62).

– un outillage de dudgeonnage (53, 54) porté par le support (60) à son extrémité opposée à celle reliée au chariot (52), l'écrou (61) étant dans une position intermédiaire entre le chariot (52) et l'outillage (63), l'inclinaison des parties successives des rampes (80, 81) l'une par rapport à l'autre étant telle que le chariot (52) et l'outillage (53, 54) qui ne sont reliés qu'à la vis articulée (57) puissent se déplacer et s'orienter pour l'introduction de l'outil (54) dans le tube (8) par déplacement du chariot (52) grâce au moteur (62) et à l'écrou (61).

## Claims

1. Process for lining a peripheral tube of a steam generator comprising a nest of parallel tubes (8), having a cross-section of substantially circular shape, in which the tubes (8) are uniformly distribured, said tubes being crimped at their ends into a circular tube plate (2) over the entire thickness of said plate, so as to project in relation to one of the faces (2b) of the plate, called the exit face, and to be flush with the other face (2a) or entry face, below which the steam generator forms a water box (3) of hemispherical shape, the ends of the peripheral tubes being flush with the entry face of the tube plate, said ends being positioned near the wall of the water box, and the lining process comprising, in a known manner, the insertion of a liner (12) into the tube (8) through one of the ends thereof, from the entry face (2a) of the tube plate (2), the mounting of the liner inside the tube (8) by diametral expansion (12) in at least two regions situated in the vicinity of the ends thereof, and the crimping by roller-expanding the liner (12) in each of the expansion regions, characterised in that the roller-expansion of the liner (12) is performed in a region of the tube (8) situated within the tube plate in a position substantially equidistant from the faces (2a and 2b) of the tube plate, near the neutral axis of the tube plate and in a region situated beyond the exit face (2b) of the tube plate, the liner (12) having a length between 40 and 80% of the thickness of the tube plate.

2. Lining process according to claim 1, characterised in that the liner (12) has a length of approximately 0.40 metres, if the tube plate (2) has a thickness slightly above 0.50 metres.

3. Handling and roller-expanding device for carrying out the process according to either claim 1 or 2, characterised in that it comprises:

– a curved structure (20) consisting of two flat side flanges (20a, 20b) and a bottom of curved shape (23′) connected to each of the flanges (20a, 20b),

– a curved guiding slid (24a, 24b) associated with each of the side flanges (20a, 20b),

– a trolley (21) mounted so as to be movable in the structure (20) and guided along a curved trajectory more or less along the inner wall of the water box (3), by virtue of wheels (25, 26) cooperating with the guiding slides (24a, 24b) of the structure (20),

– a means for driving (30, 31, 40, 41) the trolley (21) along the curved slides (24a, 24b) in either direction,

– a roller-expanding device, whose drive means (22) are carried by the trolley (21) comprising a rigid rollerexpanding tool (24) connected to the driving means carried by the trolley, by means of a flexible tube (23) inside which is placed a flexible drive for driving the roller-expanding tool (24), by virtue of the drive means (22),

– and a guiding device (38) for the roller-expanding tool (24) on leaving the structure (20).

4. Device according to claim 3, characterised in that the rigid roller-expanding tool, (24) is connected to the flexible tube (23) by a coupling (39) of such diameter that it forms an abutment for stopping the equipment (24) and the trolley (21) on the end of the liner (12) which is situated within the tube plate (2).

5. Device according to claim 3, characterised in that the rigid roller-expanding tool (24) is connected to the flexible tube (23) by means of a coupling (39) forming a rotary abutment which causes the equipment (24) and the trolley (21) to stop when it comes to bear on the guiding device (38) on leaving the structure (20).

6. Lining device according to any one of claims 3, 4 and 5, characterised in that the driving means (30, 31) comprise a screw-and-nut assembly, whose nut (31) is connected to the trolley (21) by means of a coupling (29), making it possible for the trolley to move in at least one direction at right angles to the screw (30) which is arranged along the length of the curved slides (24a, 24b).

7. Lining device according to any one of claims 3, 4 and 5, characterised in that the driving means (40, 41) comprise a chain (40) whose travel follows approximately the travel of the curved slides (24a, 24b) and a driving pinion (41) meshing with the chain, and that the trolley is connected to the chain (40) by a coupling (29).

8. Device according to claim 7, characterised in that it additionally comprises a pulley (46) for guiding the roller-expanding tool (24) during the movements of the trolley (21).

9. Handling and roller-expanding device for carrying out the process according to either claims 1 or 2, characterised in that it comprises a guiding structure (51) attached to the articulated arm (50), allowing a tool to be placed in any position vertically in line with a tube (8) of the nest and comprising slides (68, 69, 68', 69') forming guide ramps (80, 81) having at least two successive parts forming a certain angle between them, the final part of the guide ramp having the direction of the axis of the tube (8), a screw (57) articulated to one of the ends of the structure (51) and arranged over the entire length of said structure (51), a trolley (52) fitted with wheels intended to cooperate with the ramps (80, 81), comprising a support (60) in which a nut, engaged in the screw (57) and driven by a motor (62), is rotatably mounted, a roller-expanding equipment (53, 54) carried by the support (60) at the end thereof remote from the one connected to the trolley (52), the nut (61) being in an intermediate position between the trolley (52) and the equipment (63), the inclination of the successive parts of the ramps (80, 81) in relation to each other being such that the trolley (52) and the equipment (53, 54) which are connected only to the articulated screw (57) can travel and adjust themselves for the insertion of the tool (54) into the tube (8) as a result of the movement of the trolley (52) by virtue of the motor (62) and the nut (61).

## Patentansprüche

1. Verfahren zum Verkleiden eines Umfangsrohres eines Dampfgenerators mit einem Bündel von parallelen Rohren (8), die einen Querschnitt von im wesentlichen Kreisform aufweisen, in dem die Rohre (8) regelmäßig verteilt sind, wobei diese Rohre an ihren Enden in eine rohrförmige kreisförmige Platte (2) über die gesamte Dicke dieser Platte eingesetzt sind, derart, daß sie bezüglich einer der Seiten (2b) der Platte, genannt Ausgangsseite, vorspringen und an die andere Seite (2a) oder Eingangsseite anliegen bzw. an diese anschließen, unterhalb derer der Dampfgenerator einen Wasserbehälter (3) von Halbkugelform bildet, wobei die Enden der Umfangsrohre, die an die Eingangsseite der rohrförmigen Platte anschließen, in der Nähe der Seitenwand des Wasserbehälters angeordnet sind, und das Verfahren zum Verkleiden in an sich bekannter Weise aufweist, das Einführen einer Hülse (12) in das Rohr (8) durch eines seiner Enden, von der Eingangsseite (2a) der rohrförmigen Platte (2) aus, das Festlegen durch diametrale Expansion der Hülse (12) im Inneren des Rohres (8) in wenigstens zwei Zonen, die in der Nähe ihrer Enden angeordnet sind, und durch Einwalzen das Einfalzen der Hülse (12) in jede der Expansionszonen, dadurch gekennzeichnet, daß das Einwalzen der Hülse (12) in der Zone des Rohres (8) ausgeführt wird, die im Inneren der rohrförmigen Platte in einer Stellung angeordnet ist, die im wesentlichen gleich von den beiden Seiten (2a und 2b) der rohrförmigen Platte beabstandet ist, in der Nähe der Neutralfaser der rohrförmigen Platte und in eine Zone, die oberhalb der Ausgangsseite (2b) der rohrförmigen Platte angeordnet ist, wobei die Hülse (12) eine Länge zwischen 40 und 80% der Dicke der rohrförmigen Platte aufweist.

2. Verfahren zum Verkleiden nach Anspruch 1, dadurch gekennzeichnet, daß in dem Fall, wo die rohrförmige Platte (2) eine Dicke aufweist, die etwas größer ist als 0,50 Meter, die Hülse (12) eine Länge in der Nähe von 0,40 Metern aufweist.

3. Vorrichtung zum Handhaben und Einwalzen für die Durchführung des Verfahrens nach einem der Ansprüche 1 oder 2, dadurch gekennzeichnet, daß sie aufweist:

einen gebogenen Rahmen (20), der aus zwei seitlichen ebenen Flanschen (20a, 20b) und einem Boden von gebogener Form (23') gebildet ist, der mit jedem der Flansche (20a, 20b) verbunden ist,

eine gebogene Führungsleiteinrichtung (24a, 24b), die einem jeden der seitlichen Flansche (20a, 20b) zugeordnet ist;

einen Wagen (21), der in dem Rahmen (20) beweglich angebracht ist und gemäß einer gebogenen Bahn geführt ist, die im wesentlichen der inneren Seitenwand des Wasserbehälters (3) folgt, dank Rollen (25, 26), die mit den Gleitführungen (24a, 24b) des Rahmens (20) zusammenwirken,

eine Antriebseinrichtung (30, 31, 40, 41) des Wagens (21) entlang der gebogenen Gleitführungen (24a, 24b), in die eine oder die andere Richtung,

eine Einwalzanordnung, deren Motoreinrichtungen (22) von dem Wagen (21) getragen werden, die ein steifes Einwalzwerkzeug (24) aufweist, das mit den Motoreinrichtungen verbunden ist, die von dem Wagen getragen werden, durch ein biegsames Rohr (23), in dessen Innerem eine biegsame Antriebseinrichtung des Einwalzwerkzeugs (24) ausgehend von den Motoreinrichtungen (22) angeordnet ist, und

eine Führungsvorrichtung (38) des Einwalzwerkzeugs (24) am Ausgang des Rahmens (20).

4. Vorrichtung nach Anspruch 3, dadurch gekennzeichnet, daß das steife Einwalzwerkzeug (24) mit dem biegsamen Rohr (23) durch ein Verbindungsstück (39) verbunden ist, das einen derartigen Durchmesser aufweist, daß es einen Endanschlag des Werkzeugs (24) und des Wagens (21) am Ende der Hülse (12) bildet, der im Inneren der rohrförmigen Platte (2) angeordnet ist.

5. Vorrichtung nach Anspruch 3, dadurch gekennzeichnet, daß das steife Einwalzwerkzeug (24) mit dem biegsamen Rohr (23) mittels eines Verbindungsstückes (39) verbunden ist, das einen Drehanschlag bildet, der das Anhalten des Werkzeugs (24) und des Wagens (21) bestimmt, wenn er in Anschlag an die Führungsvorrichtung (38) am Ausgang des Rahmens (20) kommt.

6. Vorrichtung nach einem der Ansprüche 3, 4 oder 5, dadurch gekennzeichnet, daß die Antriebseinrichtung (30, 31) durch eine Anordnung Schraube-Mutter gebildet ist, wobei die Mutter (31) mit dem Wagen (21) mittels eines Verbindungsstückes (29) verbunden ist, das dem Wagen eine Möglichkeit des Ausweichens in wenigstens eine Richtung senkrecht zur Schraube (30) erlaubt, die entlang der Länge der gebogenen Gleiteinrichtungen (24a, 24b) angeordnet ist.

7. Vorrichtung nach einem der Ansprüche 3, 4 oder 5, dadurch gekennzeichnet, daß die Antriebseinrichtung (40, 41) durch eine Kette (40) gebildet ist, deren Verlauf angenähert dem Verlauf der gebogenen Gleitführungen (24a, 24b) folgt und ein Antriebsritzel (41) in die Kette eingreift, wobei der Wagen mit der Kette (40) durch ein Verbindungsstück (29) verbunden ist.

8. Vorrichtung nach Anspruch 7, dadurch gekennzeichnet, daß sie eine Führungsrolle (46) des Einwalzwerkzeugs (24) bei der Bewegung des Wagens (21) aufweist.

9. Vorrichtung zum Handhaben und Einwalzen für die Durchführung des Verfahrens nach einem der Ansprüche 1 oder 2, dadurch gekennzeichnet, daß sie aufweist:

einen Führungsrahmen (51), der am gelenkigen Arm (50) festgelegt ist, der erlaubt, ein Werkzeug in irgendeine Stellung an der Senkrechten eines Rohres (8) des Bündels zu plazieren und Gleitführungen (68, 69, 68', 69') aufweist, die Führungsrampen (80, 81) bilden, wobei wenigstens zwei aufeinanderfolgende Bereiche untereinander einen gewissen Winkel bilden, wobei der Bereich der Rampe der Endführung die Richtung der Achse des Rohres (8) aufweist,

eine Schraube (57), die an einem der Enden des Rahmens (51) angelenkt und entlang der gesamten Länge des Rahmens (51) angeordnet ist,

einen Wagen (52), der mit Rädern versehen ist, die dazu bestimmt sind, mit den Rampen (80, 81) zusammenzuwirken, der einen Support (60) aufweist, in den drehbar eine Mutter (61) angeordnet ist, die mit der Schraube (57) in Eingriff steht und durch einen Motor (62) angetrieben wird,

ein Einwalzwerkzeug (53, 54), das von dem Support (60) an seinem Ende getragen wird, das jenem gegenüberliegt, das mit dem Wagen (52) verbunden ist, wobei die Mutter (61) sich in einer Zwischenstellung zwischen dem Wagen (52) und dem Werkzeug 63) befindet, wobei die Neigung der aufeinanderfolgenden Bereiche der Rampen (80, 81), die eine bezüglich der anderen derart ist, daß der Wagen (52) und das Werkzeug (53, 54), die nur mit der angelenkten Schraube (57) verbunden sind, sich bewegen und für die Einführung des Werkzeugs (54) in das Rohr (8) sich ausrichten können, durch Bewegen des Wagens (52) dank des Motors (62) und der Mutter (61).

11

# FIG.1

FIG.2

FIG. 3a

FIG. 3b

FIG.4

20a

20b

20d

27

23'

20

24c

20c

V

V

**FIG.5**

FIG.6

FIG.7

# FIG.8

FIG.9

# FIG.9a

# FIG.13

# FIG.13a

FIG.10

FIG.10a

EP 0 245 134 B1

FIG.11

FIG.12